(19) Europäisches Patentamt / European Patent Office / Office européen des brevets

(11) **EP 4 523 950 A1**

(12) **EUROPEAN PATENT APPLICATION**

(43) Date of publication:
19.03.2025 Bulletin 2025/12

(21) Application number: 23197551.7

(22) Date of filing: 14.09.2023

(51) International Patent Classification (IPC):
**B60L 53/10** (2019.01)     **B60L 53/62** (2019.01)
**B60L 55/00** (2019.01)     **H02J 7/04** (2006.01)

(52) Cooperative Patent Classification (CPC):
**B60L 53/10; B60L 53/11; B60L 53/62; B60L 55/00; H02J 7/04;** B60L 50/60; B60L 2210/10; B60L 2210/20; B60L 2210/30; B60L 2210/40; H02J 2207/20; H02J 2207/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: Hitachi Energy Ltd
8050 Zürich (CH)

(72) Inventors:
• MOGOROVIC, Marko
1205 Geneva (CH)
• SIEMASZKO, Daniel
1450 Ste-Croix (CH)
• YUAN, ChunMing
Beijing, 100062 (CN)

(74) Representative: Vossius & Partner
Patentanwälte Rechtsanwälte mbB
Siebertstraße 3
81675 München (DE)

(54) **CONTROL OF INNER POWER FLOWS OF AN ELECTRICAL SYSTEM**

(57) The present disclosure relates to a method for controlling inner power flows of an electrical system comprising a power source, an electrical component, and a power converter having a primary side, wherein the primary side of the power converter is electrically coupled to the power source via the electrical component, wherein the power converter comprises a plurality of cells being electrically coupled in series to one another at a primary side of the plurality of cells, the method comprising: obtaining at least one electrical parameter of the electrical system; generating a control signal for each of the plurality of cells based on the obtained at least one electrical parameter; and controlling the inner power flows of the electrical system by adjusting voltages of the primary side of the plurality of cells based on the generated control signal, such that a voltage difference between a voltage of the power source and a sum of the voltages of the primary side of the plurality of cells causes a controlled current flow through the electrical component.

FIG. 1

**Description**

The present disclosure relates to a method, device, and system for controlling inner power flows of an electrical system.

As the technology evolves, electrical vehicles (EVs) are equipped with an increasing battery capacity and faster charging speed (e.g., DC fast charging power is also required to reach 350kW~600kW). Accordingly, the new EVs' voltage platform is shifting from 400V to 800V-1kV. This indicates that, in the upcoming years, different charging infrastructures are likely to be required with different battery voltage platforms and/or charging power levels. However, it is impractical to install different separate chargers to meet the changing requirements due to the limited available footprint, e.g., highway rest stops, service stations, and petrol stations.

Thus, it is desirable to develop a modular and reconfigurable power converter that is capable of delivering power to the EVs at different voltage and power levels, preferably for different charging ports, but only within one power conversion. Such power converter may be referred to as a multiplexing power converter. Moreover, in an EV charging infrastructure (EVCI), it is further desirable to flexibly connect car batteries with bidirectional flow capability, together with other loads and sources.

Such desirable modularity and reconfigurability of a power converter may be achieved by stacking multiple cells in a power converter. However, this does not sufficiently meet the aforementioned requirements without a proper control, in particular the power control of the active power flow in each of the stacked multiple cells that takes care of the voltage balance, that flexibly routes powers involved, and that responds fast to any new re-configuration requests from the situation of the EVs present. To this end, a solid-state transformer (SST) may be used owing to, among others, the controllability thereof. In particular, an AC/DC based (or DC/DC with one bulky AC/DC) modular cell comprising an SST may be used. On the AC side, it is often required to control both active and reactive powers which may come as a challenge when full flexibility is requested on the individual cells.

Thus, there is a need to improve a method, device, and system for controlling inner power flows of an electrical system, in particular so as to enable a flexibility of following P,Qset points in various ways, while keeping the voltage balance on the individual output ports of the cells comprised in the power converter, and further while re-routing powers as requested by the EV batteries, which can be charged or discharged for a possible support when the situation requires it.

The present disclosure relates to a method for controlling inner power flows of an electrical system comprising a power source, an electrical component, and a power converter having a primary side, wherein the primary side of the power converter is electrically coupled to the power source via the electrical component, wherein the power converter comprises a plurality of cells being electrically coupled in series to one another at a primary side of the plurality of cells, the method comprising: obtaining at least one electrical parameter of the electrical system; generating a control signal for each of the plurality of cells based on the obtained at least one electrical parameter; and controlling the inner power flows of the electrical system by adjusting voltages of the primary side of the plurality of cells based on the generated control signal, such that a voltage difference between a voltage of the power source and a sum of the voltages of the primary side of the plurality of cells causes a controlled current flow through the electrical component.

Various embodiments may preferably implement the following features:
Preferably, controlling the inner power flows comprises or is controlling the power flows of the power converter, in particular the power flows of the each of the plurality of cells. More preferably, controlling the inner power flows comprises or is controlling a portion of each of the plurality of cells that is interfacing the power source and the remaining portion of each of the plurality of cells.

Preferably, the plurality of cells comprises a respectively plurality of cell-converters, wherein the primary side of the plurality of cells is electrically coupled to the respectively plurality of cell-converters, in particular two ports of the respective plurality of cell-converters form the primary side of the plurality of cells. More preferably, controlling the inner power flows comprises or is controlling the power flows of respectively plurality of cells-converters.

Preferably, the plurality of cells comprises a secondary side, different from the primary side of the plurality of cells, and wherein the plurality of cells are galvanically isolated from one another at the secondary side of the plurality of cells.

Preferably, the power system is a DC system, the power source is a DC power source, each of the plurality of cells comprises a DC-to-AC converter or a DC-to-DC converter, and a first DC portion of the DC-to-AC converter is electrically coupled to the primary side of the plurality of cells or a first DC portion of the DC-to-DC converter is electrically coupled to the primary side of the plurality of cells.

Preferably, adjusting the voltages of the primary side of the plurality of cells comprises: adjusting a magnitude of the voltages of the primary side of the plurality of cells by controlling the first DC portion of the DC-to-AC converter based on the generated control signal or by controlling the first DC portion of the DC-to-DC converter based on the generated control signal.

Preferably, in particular when the power system is a DC system, more particularly, when the electrical system is resistive, controlling comprises or is controlling the inner power flows of the electrical system by adjusting voltages of the primary side of the plurality of cells based on the generated control signal, such that a voltage difference between a voltage of the power source and a sum of the voltages of the primary side of the plurality of cells setting a voltage drop over the electrical component causes a controlled current flow through the electrical component.

Preferably, the electrical system is an AC system, the power source is an AC power source, each of the plurality of cells comprises an AC-to-DC converter or an AC-to-AC converter, and a first AC portion of the AC-to-DC converter is electrically coupled to the primary side of the plurality of cells or a first AC portion of the AC-to-AC converter is electrically coupled to the primary side of the plurality of cells.

Preferably, adjusting the voltages of the primary side of the plurality of cells comprises: adjusting a magnitude and a phase of the voltages of the primary side of the plurality of cells by controlling the first AC portion of the AC-to-DC converter based on the generated control signal or by controlling the first AC portion of the AC-to-DC converter the AC-to-AC converter based on the generated control signal.

Preferably, in particular when the power system is an AC system, more particularly, when the electrical system is inductive and/or capacitive, and optionally resistive, controlling comprises or is controlling the inner power flows of the electrical system by adjusting voltages of the primary side of the plurality of cells based on the generated control signal, such that a voltage difference between a voltage of the power source and a sum of the voltages of the primary side of the plurality of cells setting a voltage across the electrical component induces a controlled current flow through the electrical component.

Preferably, a voltage of the power grid, the voltages of the primary side of the plurality of cells, the controlled current, and the voltage drop over the electrical component are vectors comprising a magnitude and phase information, and the sum of the voltages of the primary side of the plurality of cells is a vector sum.

Preferably, the electrical system further comprises a first switch and a second switch, the first switch electrically couples the power grid to the electrical component in series, the second switch being electrically coupled to a node between the first switch and the electrical component, and the second switch electrically couples the power grid to the electrical component in parallel.

Preferably, the method further comprises closing one of the first switch and the second switch; and opening the other one of the first switch and the second switch.

Preferably, the electrical component is resistive, or the electrical component is inductive and/or capacitive, and optionally resistive.

Preferably, the obtained at least one electrical parameter is a voltage and/or a current of the power source, the electrical component, the primary side of the power converter, or the primary side of the plurality of cells.

Preferably, the power of at least one of the plurality of cells flows bidirectionally based on the generated control signal.

The present disclosure also relates to a device for controlling inner power flows of an electrical system comprising a power source, an electrical component, and a power converter having a primary side, wherein the primary side of the power converter is electrically coupled to the power source via the electrical component, wherein the power converter comprises a plurality of cells being electrically coupled in series to one another at a primary side of the plurality of cells, wherein the device comprises a processor being configured to: obtain at least one electrical parameter of the electrical system; generate a control signal for each of the plurality of cells based on the obtained at least one electrical parameter; and control the inner power flows of the electrical system by adjusting voltages of the primary side of the plurality of cells based on the generated control signal, such that a voltage difference between a voltage of the power source and a sum of the voltages of the primary side of the plurality of cells causes a controlled current flow through the electrical component.

Preferably, the processor is further configured to perform the method according to any one of the embodiments disclosed herein.

The present disclosure further relates to a system for controlling inner power flows of an electrical system, wherein the system comprises the device according to any one of the embodiments disclosed herein, and the electrical system comprising a power source, an electrical component, a power converter having a primary side, wherein the primary side of the power converter is electrically coupled to the power source via the electrical component, wherein the power converter comprises a plurality of cells being electrically coupled in series to one another at a primary side of the plurality of cells.

Various exemplary embodiments of the present disclosure disclosed herein are directed to providing features that will become readily apparent by reference to the following description when taken in conjunction with the accompanying drawings. In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.

**Description of the Drawings**

FIG. 1 illustrates a flow chart of a method for controlling inner power flows of an electrical system according to an embodiment of the present disclosure.

Fig. 2a) illustrates a power converter according to an embodiment and the corresponding controlling method according to an embodiment.

Fig. 2b) illustrates a power converter according to an embodiment and the corresponding controlling method according to an embodiment.

Fig. 3a) illustrates a power converter according to an embodiment and the corresponding controlling method according to an embodiment.

Fig. 3b) illustrates a power converter according to an embodiment and the corresponding controlling method according to an embodiment.

Fig. 4 illustrates an electrical power system according to an embodiment of the present disclosure.

Fig. 5 illustrates an electrical power system according to an embodiment of the present disclosure and an operation thereof according to a control method according to an embodiment of the present disclosure.

Fig. 6 illustrates an electrical power system according to an embodiment of the present disclosure and an operation thereof according to a control method according to an embodiment of the present disclosure.

Fig. 7 illustrates an electrical power system according to an embodiment of the present disclosure and an operation thereof according to a control method according to an embodiment of the present disclosure.

Fig. 8a) illustrates a device according to an embodiment of the present disclosure.

Fig. 8b) illustrates an electrical system according to an embodiment of the present disclosure.

Fig. 8c) illustrates a system according to an embodiment of the present disclosure.

In the following, exemplary embodiments of the disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

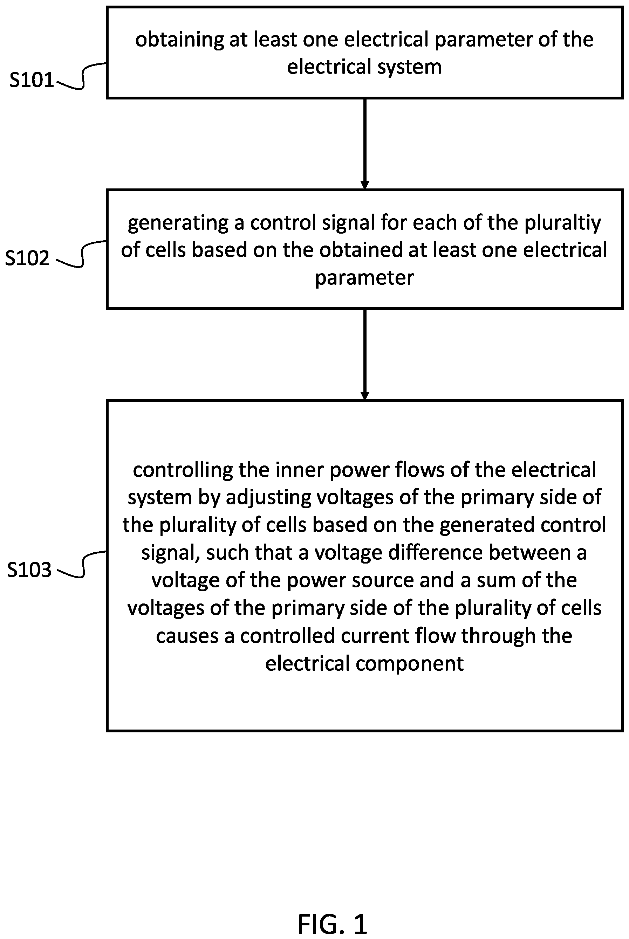

FIG. 1 illustrates a flow chart of a method for controlling inner power flows of an electrical system according to an embodiment of the present disclosure. In particular, the flowchart shown in Fig. 1 relates to a method for controlling inner power flows of an electrical system comprising a power source, an electrical component, and a power converter having a primary side, wherein the primary side of the power converter is electrically coupled to the power source via the electrical component, wherein the power converter comprises a plurality of cells being electrically coupled in series to one another at a primary side of the plurality of cells. In an embodiment, the plurality of cells comprises a secondary side, different from the primary side of the plurality of cells. In an embodiment, the plurality of cells are galvanically isolated from one another at the secondary side of the plurality of cells. In an embodiment, the electrical component is resistive, or the electrical component is inductive and/or capacitive, and optionally resistive. At S101, at least one electrical parameter of the electrical system is obtained. In an embodiment, the obtained at least one electrical parameter is a voltage and/or a current of the power source, the electrical component, the primary side of the power converter, or the primary side of the plurality of cells. At S102, a control signal for each of the plurality of cells is generated based on the obtained at least one electrical parameter. In an embodiment, the control signal is a PWM signal. In an embodiment, each of the plurality of cells, in particular at least one controllable switching component comprised therein, is controllable based on the control signal. In an embodiment, each of the plurality of cells is or comprises a solid-state transformer (SST). At S103, the inner power flows of the electrical system are controlled by adjusting voltages of the primary side of the plurality of cells based on the generated control signal, such that a voltage difference between a voltage of the power source and a sum of the voltages of the primary side of the plurality of cells causes a controlled current flow through the electrical component.

In an embodiment, controlling the inner power flows comprises or is controlling the power flows of the power converter, in particular the power flows of the each of the plurality of cells. In a particular embodiment, controlling the inner power flows comprises or is controlling a portion of each of the plurality of cells that is interfacing the power source and the remaining portion of each of the plurality of cells.

In an embodiment, the plurality of cells comprises a respectively plurality of cell-converters, wherein the primary side of the plurality of cells is electrically coupled to the respectively plurality of cell-converters, in particular two ports of the respective plurality of cell-converters form the primary side of the plurality of cells. In a particular embodiment, controlling the inner power flows comprises or is controlling the power flows of respectively plurality of cells-converters.

In an embodiment, the plurality of cells comprises a secondary side, different from the primary side of the plurality of cells, and wherein the plurality of cells are galvanically isolated from one another at the secondary side of the plurality of cells.

In an embodiment, the secondary side of at least one of the plurality of cells is electrically coupled to a DC load, DC source, or DC storage element. The DC load may require a galvanic isolation. The DC load may be any one of a battery, in particular the battery of an electrical vehicle, a distributed energy resource, a DC motor, a local energy storage facility (e.g., that is different from the battery, in particular the battery of an electrical vehicle), or the like.

In an embodiment, the power system is a DC system, the power source is a DC power source, each of the plurality of cells comprises a DC-to-AC converter or a DC-to-DC converter, and a first DC portion of the DC-to-AC converter is electrically coupled to the primary side of the plurality of cells or a first DC portion of the DC-to-DC converter is electrically coupled to the primary side of the plurality of cells.

In an embodiment, adjusting the voltages of the primary side of the plurality of cells comprises: adjusting a magnitude of the voltages of the primary side of the plurality of cells by controlling the first DC portion of the DC-to-AC converter based on the generated control signal or by controlling the first DC portion of the DC-to-DC converter based on the generated control signal.

In an embodiment, in particular when the power system is a DC system, more particularly, when the electrical system is resistive, controlling comprises or is controlling the inner power flows of the electrical system by adjusting voltages of the primary side of the plurality of cells based on the generated control signal, such that a voltage difference between a voltage of the power source and a sum of the voltages of the primary side of the plurality of cells setting a voltage drop over the electrical component causes a controlled current flow through the electrical component.

In an embodiment, the electrical system is an AC system, the power source is an AC power source, each of the plurality of cells comprises an AC-to-DC converter or an AC-to-AC converter, a first AC portion of the AC-to-DC converter is electrically coupled to the primary side of the plurality of cells or a first AC portion of the AC-to-AC converter is electrically coupled to the primary side of the plurality of cells.

In an embodiment, adjusting the voltages of the primary side of the plurality of cells comprises: adjusting a magnitude and a phase of the voltages of the primary side of the plurality of cells by controlling the first AC portion of the AC-to-DC converter based on the generated control signal or by controlling the first AC portion of the AC-to-AC converter based on the generated control signal.

In an embodiment, in particular when the power system is an AC system, more particularly, when the electrical system is inductive and/or capacitive, and optionally resistive, controlling comprises or is controlling the inner power flows of the electrical system by adjusting voltages of the primary side of the plurality of cells based on the generated control signal, such that a voltage difference between a voltage of the power source and a sum of the voltages of the primary side of the plurality of cells setting a voltage across the electrical component induces a controlled current flow through the electrical component.

In an embodiment, a voltage of the powergrid, the voltages of the primary side of the plurality of cells, the controlled current, and the voltage drop over the electrical component are vectors comprising a magnitude and phase information, and the sum of the voltages of the primary side of the plurality of cells is a vector sum.

In an embodiment, the electrical system further comprises a first switch and a second switch, the first switch electrically couples the power grid to the electrical component in series, the second switch being electrically coupled to a node between the first switch and the electrical component, and the second switch electrically couples the power grid to the electrical component in parallel.

In an embodiment, the method further comprises closing one of the first switch and the second switch; and opening the other one of the first switch and the second switch.

In an embodiment, the electrical component is resistive, or the electrical component is inductive and/or capacitive, and optionally resistive.

In an embodiment, the obtained at least one electrical parameter is a voltage and/or a current of the power source, the electrical component, the primary side of the power converter, or the primary side of the plurality of cells.

In an embodiment, the power of at least one of the plurality of cells flows bidirectionally based on the generated control signal.

The present disclosure also relates to a device for controlling inner power flows of an electrical system comprising a power source, an electrical component, and a power converter having a primary side, wherein the primary side of the power converter is electrically coupled to the power source via the electrical component, wherein the power converter comprises a plurality of cells being electrically coupled in series to one another at a primary side of the plurality of cells, wherein the device comprises a processor being configured to: obtain at least one electrical parameter of the electrical system; generate a control signal for each of the plurality of cells based on the obtained at least one electrical parameter; and control the inner power flows of the electrical system by adjusting voltages of the primary side of the plurality of cells based on the generated control signal, such that a voltage difference between a voltage of the power source and a sum of the voltages of the primary side of the plurality of cells causes a controlled current flow through the electrical component.

In an embodiment, the processor is further configured to perform the method according to any one of the embodiments disclosed herein.

The present disclosure further relates to a system for controlling inner power flows of an electrical system, wherein the system comprises the device according to any one of the embodiments disclosed herein, and the electrical system comprising a power source, an electrical component, a power converter having a primary side, wherein the primary side of the power converter is electrically coupled to the power source via the electrical component, wherein the power converter comprises a plurality of cells being electrically coupled in series to one another at a primary side of the plurality of cells.

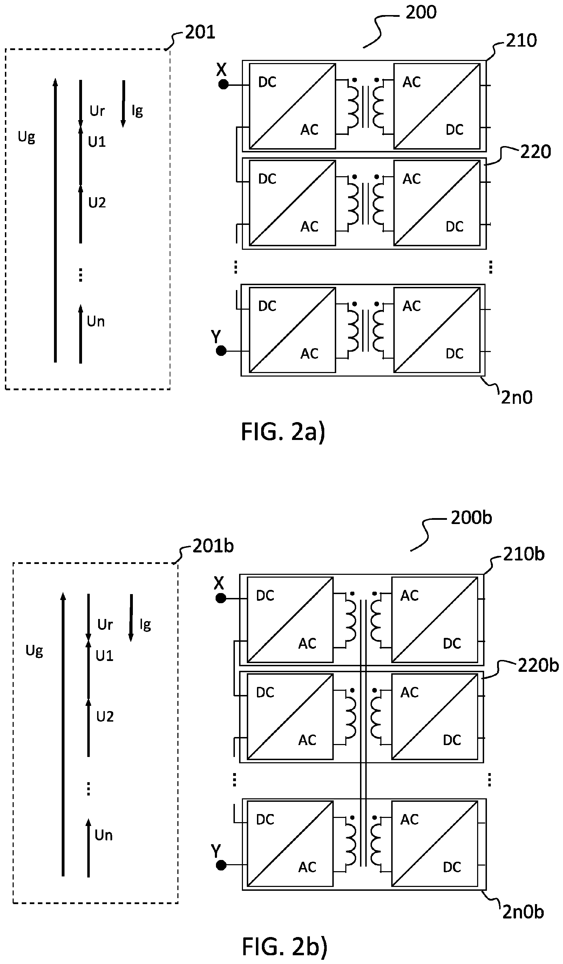

Fig. 2a) illustrates a power converter according to an embodiment and the corresponding controlling method therefor according to an embodiment. In particular, Fig. 2a) illustrates a power converter, in particular a DC-to-DC power converter, 200. The power converter 200 comprises a plurality of cells, more specifically n number of cells, 210, 220, and 2n0, wherein n is a natural number. A primary side of each of the plurality of cells 210, 220, and 2n0 is electrically coupled to one another in series as shown in Fig. 2a). Each of the plurality of cells 210, 220, and 2n0 comprises a galvanically isolated DC-to-DC power converter. The DC-to-DC power converter comprises a DC-to-AC converter, a transformer, and an AC-to-DC converter. The DC-to-AC converter is galvanically isolated from the AC-to-DC converter by the transformer, in particular a single winding medium frequency transformer (MFT), electrically coupling the DC-to-AC converter to the AC-to-DC converter. The DC-to-AC converter and the AC-to-DC converter comprise a first set of controllable switching components and a second set of controllable switching components, respectively. Thus, the power converter 200 may be referred to as an SST with single-winding MFTs. In an embodiment, each of the plurality of cells 210, 220, and 2n0 comprises a secondary side, different from the primary side thereof. It is noted that the power converter 200 is configured as input-series-output-separated. That is, the primary side of each of the plurality of cells is series-connected to one another forming a series-connected input of the power converter 200, i.e., primary side of the power converter 200 formed by nodes X and Y, whereas the secondary side of each of the plurality of cells is galvanically isolated from one another, thereby forming a separated output of the power converter 200, i.e., secondary side of the power converter 200. In an embodiment, the secondary side of each of the plurality of cells are electrically coupled to one another in series or in parallel. That is, the power converter may be configured as input-series-output-series or input-series-output-parallel.

The power converter 200 may be used in an electrical power system. An exemplary electrical power system, in which the power converter may be comprised and controlled is described below.

An electrical power system may be a DC power system comprising a DC power source being electrically coupled to the primary side of the power converter 200 via an electrical component, in particular a resistive component. The power converter 200 is electrically coupled to the electrical component in series at node X. The DC power source and the electrical component are omitted in Fig. 2a). The voltage and the current of the DC power source are denoted as $U_g$ and $I_g$, respectively, the voltage drop over the electrical component is denoted as $U_r$ and the voltages at the primary side of each of the plurality of cells 210, 220, and 2n0 are denoted as $U_1$, $U_2$, and $U_n$, respectively, and the current through the electrical component is denoted as $I_r$. It is noted $I_g = I_r$ applies for a series connected electrical component.

The power converter 200 may be controlled according to the method disclosed in Fig. 1, in particular when configured in the electrical power system as described above. That is, $U_g$, $I_g$, $U_r$, $U_1$, $U_2$, and/or $U_n$ are obtained, and a control signal for controlling the plurality of cells 210, 220, and 2n0 are generated based thereon. The control signal may be or comprise first signals, in particular PWM signals, for controlling the first set of controllable switching components comprised in the DC-to-AC converter of each of the plurality of cells. The inner power flows of the electrical system are controlled based on the generated control signal. Specifically, this is done through adjusting voltages of the primary side of the plurality of cells 210, 220, and 2n0 based on the generated control signals, in particular by controlling the first set of controllable switching components comprised in the DC-to-AC converter, such that a voltage difference between a voltage of the power source and a sum of the voltages of the primary side of the plurality of cells 210, 220, and 2n0 setting a voltage drop over the electrical component, which causes a controlled current flow through the electrical component, in particular to compensate the voltage difference. That is, such control scheme operates with the following constraints:

$$\sum_{i=1}^{n} U_i + U_r + U_g = 0, \qquad wherein \; \forall i \in \{1, ..., n\}, I_i = I_g \qquad (1)$$

wherein $I_i$ and $U_i$ respectively denote a current and voltage of an $i^{th}$ cell of the plurality of cells 210, 220, and 2n0. This is illustrated in a diagram 201. The corresponding power flow of an $i^{th}$ cell of the plurality of cells 210, 220, and 2n0 is given by,

$$P_i = U_i I_i = U_i I_g \qquad (2)$$

Since $I_i$ is same for all n cells in this embodiment, $P_i$ is proportional to $U_i$ and is given by $I_g$ ($I_i = I_g$) as follows:

$$P_i \sim U_i \qquad (3)$$

wherein the sign ~ denotes a proportionality. The reference for $I_g$ may be provided by any higher order system. This way, the power flows of the plurality of cells are controlled. Specifically, a portion of each of the plurality of cells that is interfacing the primary side of the plurality of cells with the grid is controlled. In this embodiment, the power flows of the AC-to-DC converter that is comprised in each of the plurality of cells are controlled. The power flows of the plurality of cells may be the inner power flows of the electrical system.

Fig. 2b) illustrates a power converter according to an embodiment and the corresponding controlling method therefor according to an embodiment. The power converter 200b shown in Fig. 2b) is different from the power converter 200 shown in Fig. 2a) in that the power converter 200b comprises a multi winding transformer that is galvanically isolating the primary side of each of the plurality of cells 210b, 220b, and 2n0b from the secondary side of each of the plurality of cells 210b, 220b, and 2n0b. Accordingly, the power converter 200b may be referred to as an SST with a multi-winding MFT. The remaining aspects of the embodiment shown in Fig. 2b) are the same as those of Fig. 2a). That is, the power converter 200b may be comprised in a DC power system with a DC power source being electrically coupled to the primary side of the power converter 200b via an electrical component, wherein the power converter 200b comprises a plurality of cells 210b, 220b, and 2n0b being electrically coupled to one another at the primary side of each of the plurality of cells 210b, 220b, and 2n0b. Also, the method for controlling the inner powers of the power system applied to Fig. 2a) may be equally applied to the power converter 200b. For conciseness, the aforementioned same aspects that are previously elaborated in the foregoing parts of the present disclosure are not repeated herein. It is understood by the skilled person that in case of multi winding MFT, the control method disclosed herein enables a compensation of different natural power flows caused by different serial inductances of the MFT windings corresponding to different cells.

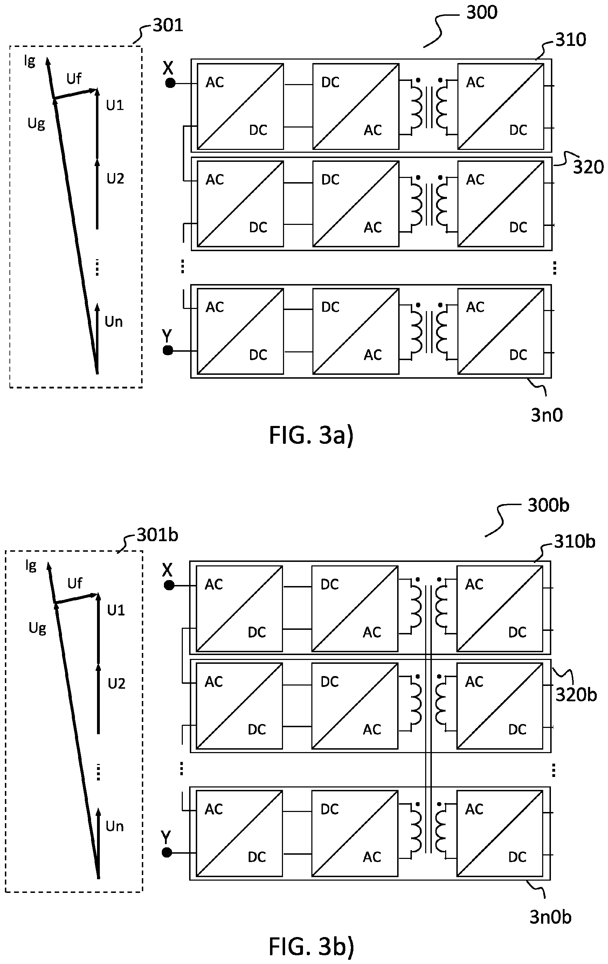

Fig. 3a) illustrates a power converter according to an embodiment and the corresponding controlling method therefor according to an embodiment. In particular, Fig. 3a) illustrates a power converter, in particular an AC-to-DC power converter, 300. The power converter 300 comprises a plurality of cells, more specifically n number of cells, 310, 320, and 3n0, wherein n is a natural number. A primary side of each of the plurality of cells 310, 320, and 3n0, is electrically coupled to one another in series as shown in Fig. 3a). Each of the plurality of cells 310, 320, and 3n0 comprises an AC-to-DC converter being electrically coupled to a DC-to-DC power converter. The DC-to-DC power converter comprises a DC-to-AC converter, a transformer, and a further AC-to-DC converter, different from said AC-to-DC converter that is electrically coupled to said DC-to-DC power converter. The two ports at the DC side of the further AC-to-DC converter form the output ports of each of the plurality of cells 310, 320, and 3n0. The DC-to-AC converter is galvanically isolated from the further AC-to-DC converter by the transformer, in particular a single winding medium frequency transformer (MFT), electrically coupling the DC-to-AC converter to the further AC-to-DC converter. The DC-to-AC converter and the AC-to-DC converter comprise a first set of controllable switching components and a second set of controllable switching components, respectively. Thus, the power converter 300 may be referred to as an SST with single-winding MFTs. In an embodiment, each of the plurality of cells 310, 320, and 3n0 comprises a secondary side, different from the primary side thereof. It is noted that the power converter 200 is configured as input-series-output-separated. That is, the primary side of each of the plurality of cells is series-connected to one another forming a series-connected input of the power converter 300, i.e., primary side of the power converter 300 formed by nodes X and Y, whereas the secondary side of each of the plurality of cells is galvanically isolated from one another, thereby forming a separated output of the power converter 300, i.e., secondary side of the power converter 300. In an embodiment, the secondary side of each of the plurality of cells is electrically coupled to one another in series or in parallel. That is, the power converter may be configured as input-series-output-series or input-series-output-parallel.

The power converter 200 may be used in an electrical power system. An exemplary electrical power system, in which the power converter may be comprised and controlled is described below.

An electrical power system may be an AC power system comprising an AC power source being electrically coupled to the primary side of the power converter 300 via an electrical component, in particular an inductive and/or capacitive, and optionally resistive, component. In an embodiment, the power converter 300 is electrically coupled to the electrical component in series at node X. The AC power source and the electrical component are omitted in Fig. 3a). The voltage and current of the DC power converter are denoted as $U_g$ and $I_g$, respectively, the voltage drop over the electrical component is denoted as $U_f$, and the voltages at the primary side of each of the plurality of cells 310, 320, and 3n0 are denoted as $U_1$, $U_2$, and $U_n$, respectively. It is noted $I_g = I_r$ applies for a series connected electrical component.

The power converter 300 may be controlled according to the method disclosed in Fig. 1, in particular when configured in the electrical power system as described above. That is, $U_g$, $I_g$, $U_r$, $U_1$, $U_2$, and/or $U_f$ are obtained, and a control signal for controlling the plurality of cells 310, 320, and 3n0 are generated based thereon. It is noted that said parameters $U_g$, $I_g$, $U_r$, $U_1$, $U_2$, and/or $U_f$ in an AC system are vectors comprising a magnitude and phase information. The control signal may be or comprise first signals, in particular PWM signals, for controlling the first set of controllable switching components comprised in the AC-to-DC converter of each of the plurality of cells. The inner power flows of the electrical system are controlled based on the generated control signal. Specifically, this is done through adjusting voltages of the primary side of the plurality of cells 310, 320, and 3n0 based on the generated control signal, in particular by controlling the first set of controllable switching components comprised in the AC-to-DC converter, such that a voltage difference between a voltage of the power source and a sum of the voltages of the primary side of the plurality of cells 310, 320, and 3n0 setting a voltage drop over the electrical component, which causes a controlled current flow through the electrical component. That is, such control scheme operates with the following constraints:

$$\sum_{i=1}^{n} \overline{U}_i + \overline{U}_f + \overline{U}_g = 0, \qquad wherein\ \forall i \in \{1, \dots, n\}, \overline{I}_g = \overline{I}_i \tag{4}$$

wherein $\overline{I}_i$ and $\overline{U}_i$ respectively denote a current and voltage of an $i^{th}$ cell of the plurality of cells 310, 320, and 3n0, and $\overline{X}$ denotes that the variable X is a complex number (e.g., a compact representation of a 2 dimensional space vector, also known as phasor). This is illustrated in the phasor diagram 301. The corresponding power flow of an $i^{th}$ cell of the plurality of cells 310, 320, and 3n0 is given by,

$$P_i = |\overline{U}_i||\overline{I}_i| \cos(\phi_i) = |\overline{U}_i||\overline{I}_g| \cos(\phi_i) \tag{5}$$

wherein the sign $|X|$ denotes an absolute value of a complex number X that has a physical meaning as magnitude of the signal. X may be the maximum value or a RMS. It is noted that whether X is a RMS or the maximum may be irrelevant to the control method described herein. $\phi_i$ denotes a phasor angle between $\overline{U}_i$ and $\overline{U}_g$.

Since $\overline{I}_i$ is same for all n cells in this embodiment, $P_i$ is proportional to $|\overline{U}_i| \cos(\phi_i)$ and is given by $|\overline{I}_g|$ ($|\overline{I}_i| = |\overline{I}_g|$) as follow:

$$P_i \sim |\overline{U}_i| \cos(\phi_i) \tag{6}$$

wherein, the sign ~ denotes the proportionality. The reference for $I_g$ may be provided by any higher order system. This way, the power flows the plurality of cells are controlled. Specifically, a portion of each of the plurality of cells that is interfacing the primary side of the plurality of cells with the grid is controlled. In this embodiment, the power flows of the AC-to-DC converter that is comprised in each of the plurality of cells are controlled. The power flows of the plurality of cells may be the inner power flows of the electrical system.

In an embodiment, the active power flow is controlled based on the measurements of the currents and/or voltages on the secondary sides of the plurality of cells, and/or the reactive power flow is controlled based on the measurements of the voltages and/or currents on the primary sides of the plurality of cells.

Fig. 3b) illustrates a power converter according to an embodiment and the corresponding controlling method therefor according to an embodiment. The power converter 300b shown in Fig. 3b) is different from the power converter 300 shown in Fig. 3a) in that the power converter 300b comprises a multi winding transformer that is galvanically isolating the primary side of each of the plurality of cells 310b, 320b, and 3n0b from the secondary side of each of the plurality of cells 310b, 320b, and 3n0b. Accordingly, the power converter 300b may be referred to as an SST with a multi-winding MFT. The remaining aspects of the embodiment shown in Fig. 3b) is the same as those of Fig. 3a). That is, the power converter 300b may be comprised in an AC power system with an AC power source being electrically coupled to the primary side of the power converter 300b via an electrical component, wherein the power converter 300b comprises a plurality of cells 310b, 320b, and 3n0b being electrically coupled to one another at the primary side of each of the plurality of cells 310b, 320b, and 3n0b. Also, the method for controlling the inner powers of the power system applied to Fig. 3a) may be equally applied to the AC power system comprising the power converter 300b. For conciseness, the aforementioned same aspects that are previously elaborated in the foregoing parts of the present disclosure are not repeated herein. It is understood by the skilled person that in case of multi winding MFT, the control method disclosed herein enables a compensation of different natural power flows caused by different serial inductances of the MFT windings corresponding to different cells.

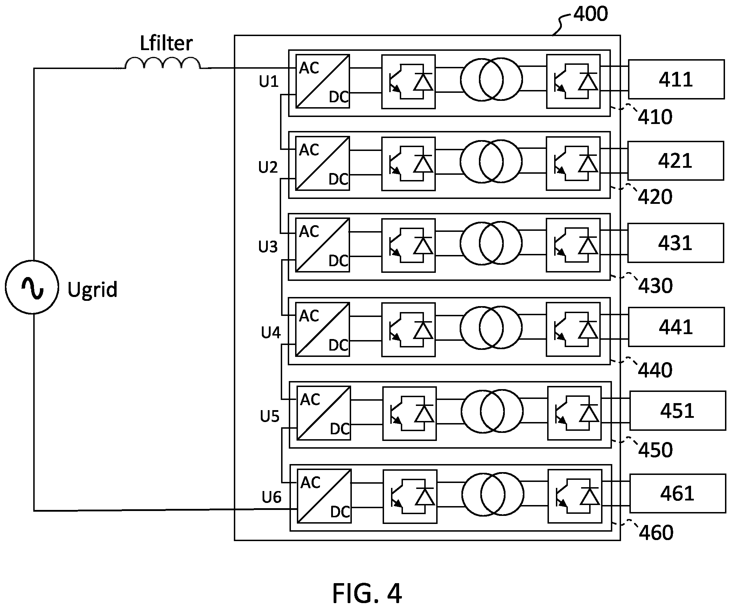

Fig. 4 illustrates an electrical power system according to an embodiment of the present disclosure. In particular, Fig. 4 illustrates an AC power system comprising an AC power source 401 being electrically coupled to an AC-to-DC power converter 400 via a series-connected inductor 402. $U_{grid}$, $I_{grid}$, and $U_{filter}$ denote the voltage of the AC power source 401, the current of the AC power source 401, and the voltage over the series-connected inductor 402. The power AC-to-DC power converter 400 is an embodiment of the power converter 300 shown in Fig. 3a) with six cells. It is understood by the skilled person that the power AC-to-DC power converter 400 may be an embodiment of the power converter 300b shown in Fig. 3b). It is noted that the AC-to-DC power converter 400 is configured as input-series-output-separated. That is, the primary side of each of the plurality of cells are series-connected to one another forming a series-connected input of the AC-to-DC power converter, whereas the secondary side of each of the plurality of cells are galvanically isolated from one another, thereby forming a separated output of the AC-to-DC power converter. Characteristics of said configuration include a galvanic insulation of every cell output, a separate power flow control of every output, only one MFT and minimum amount of power conversion stages per power path, an ability to integrate local PV and storage, a high flexibility in adding, upgrading, or changing cells. $U_1$, $U_2$, $U_3$, $U_4$, $U_5$, and $U_6$ denote voltages at the primary side of the plurality of cells 410, 420, 430, 440, 450, and 460, respectively. The separated outputs of the AC-to-DC power converter, i.e., the secondary side of each of the plurality of cells 410, 420, 430, 440, 450, and 460, are electrically coupled to a respective plurality of loads 411, 421, 431, 441, 451, and 461. Each of the plurality of cells is capable of bidirectional power flow, such that each of the plurality of loads 411, 421, 431, 441, 451, and 461 may draw power from or provide power to the system. It is noted that said parameters $U_{grid}$, $I_{grid}$, $U_{filter}$, $U_1$, $U_2$, $U_3$, $U_4$, $U_5$, and $U_6$ in an AC system are vectors comprising a magnitude and phase information.

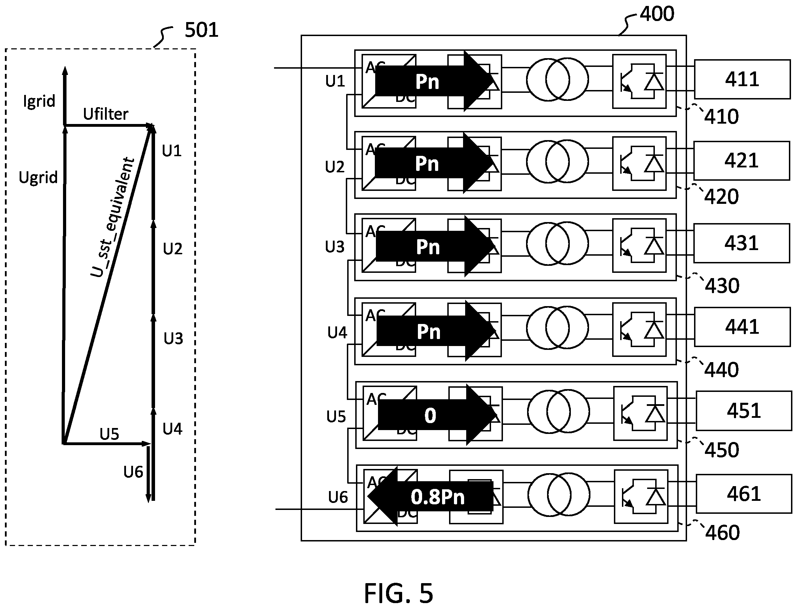

Fig. 5 illustrates an electrical power system according to an embodiment of the present disclosure and an operation thereof according to a control method according to an embodiment of the present disclosure. In particular, Fig. 5 illustrates the electrical power system shown in Fig. 4 under operation according to the method shown in Fig. 1. It is noted that the AC power source 401 and the series-connected inductor 402 are omitted in Fig. 5 for simplicity. In this embodiment, the AC power source 401 is a grid and is providing purely an active power, four cars 411, 421, 431, and 441 are charging at nominal powers, Pn, the 5th cell being electrically coupled to the batteries 451 is providing only a reactive power compensation, and photovoltaic 461 is providing power to the AC power system. The respective powers Pn, Pn, Pn, Pn, 0, and 0.8Pn through each of the plurality of cells 410, 420, 430, 440, 450, and 460 may be collectively defined as the inner power flows of the electrical system. When operated according to the method shown in Fig. 1, the electrical power system shown in Fig. 5 operates following the constraints of eq. (4) and results in the phasor quantities shown in the phasor diagram 501. Specifically, the magnitude and phase of $U_1$, $U_2$, $U_3$, $U_4$, $U_5$, and $U_6$ are adjusted based on control signals generated using measurements of the electrical system. For instance, $U_5$ is adjusted to be 90 degrees out of phase with respect to $U_{grid}$, $U_6$ is adjusted to be 180 degrees out of phase with respect to $U_{grid}$, and $U_1$, $U_2$, $U_3$, and $U_4$ are adjusted to be in phase, i.e., 0 phase angle difference therebetween, with respect to $U_{grid}$. This is done such that a voltage difference, in the phasor domain, between a voltage of the power source and a vector sum of the voltages of the primary side of the plurality of cells 410, 420, 430, 440, 450, and 460 sets a voltage drop $U_{filter}$ over the electrical component, which in turn causes a controlled current $I_{grid}$ to flow through the electrical component, $L_{filter}$. *U_sst_equivalent* denotes a vector sum of voltages of the primary side of the plurality of cells 410, 420, 430, 440, 450, and 460.

It is understood by the skilled person that the 5th cell 450 and the 6th cell 460 enables a power routing, in particular by ensuring a voltage margin to allow phase shifts among AC vectors of the cell at the primary side thereof. In case at least one of the plurality of cells is rendered uncontrollable, e.g., due to maintenance, temporary disablement, malfunction, or the like, the system may continue to operate, i.e., the power flow is controlled, by operating a power converter with a reduced number of controllable cells based on a method according to any one of the embodiments disclosed herein.

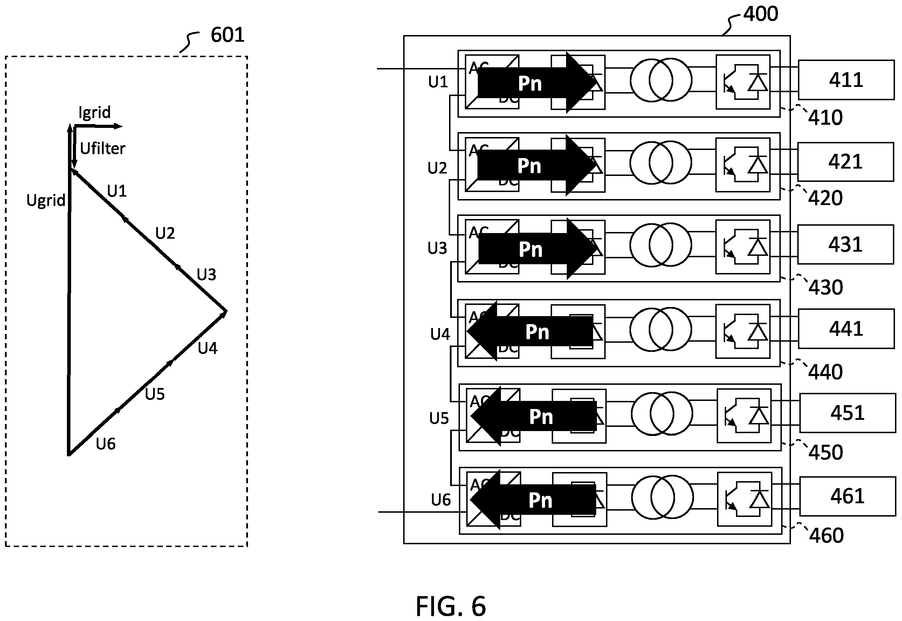

Fig. 6 illustrates an electrical power system according to an embodiment of the present disclosure and an operation thereof according to a control method according to an embodiment of the present disclosure. In particular, Fig. 6 illustrates the electrical power system shown in Fig. 4 under operation according to the method shown in Fig. 1. It is noted that the AC power source 401 and the series-connected inductor 402 are omitted in Fig. 6 for simplicity. In this embodiment, the AC power source 401 is a grid and is providing purely a reactive power, the first three cars 411, 421, and 431 are charging at nominal powers, Pn, the fourth car 441 is providing a nominal power, Pn, to the system, cell with batteries 451 is providing a nominal power, Pn, to the system, and photovoltaic 461 is providing power, Pn, to the system. The respective powers Pn, Pn, Pn, Pn, Pn, and Pn through each of the plurality of cells 410, 420, 430, 440, 450, and 460 may be collectively defined as the inner power flows of the electrical system. When operated according to the method shown in Fig. 1, the electrical power system shown in Fig. 6 operates following the constraints of eq. (4) and results in the phasor quantities shown in the phasor diagram 601. Specifically, the magnitude and phase of $U_1$, $U_2$, $U_3$, $U_4$, $U_5$, and $U_6$ are adjusted based on control signals generated using measurements of the electrical system. For instance, $U_4$, $U_5$, and $U_6$ are adjusted to be $\theta_{4,5,6}$ degrees out of phase with respect to $U_{grid}$, and $U_1$, $U_2$, and $U_3$ are adjusted to be $-\theta_{1,2,3}$ (*e.g.*, $\theta_{1,2,3} = 90 - \theta_{4,5,6}$) out of phase with respect to $U_{grid}$. It is known that the adjusted primary side voltage of each of the cells may have an arbitrary phase difference with any other voltage different from the voltage of the power source. This is done such that a voltage difference, in the phasor domain, between a voltage of the power source and a vector sum of the voltages of the primary side of the plurality of cells 410, 420, 430, 440, 450, and 460 sets a voltage $U_{filter}$ across the electrical component, which in turn induces the controlled current $I_{grid}$ to flow through the electrical component, $L_{filter}$. Accordingly, the inner power flows of the electrical system are controlled.

It is understood by the skilled person that the reactive power from the grid is useful to generate the current vector in an appropriate direction to enable an active power circulation between the cells. It is also noted that a reactive power injection in the grid is not desired, and not allowed above some level.

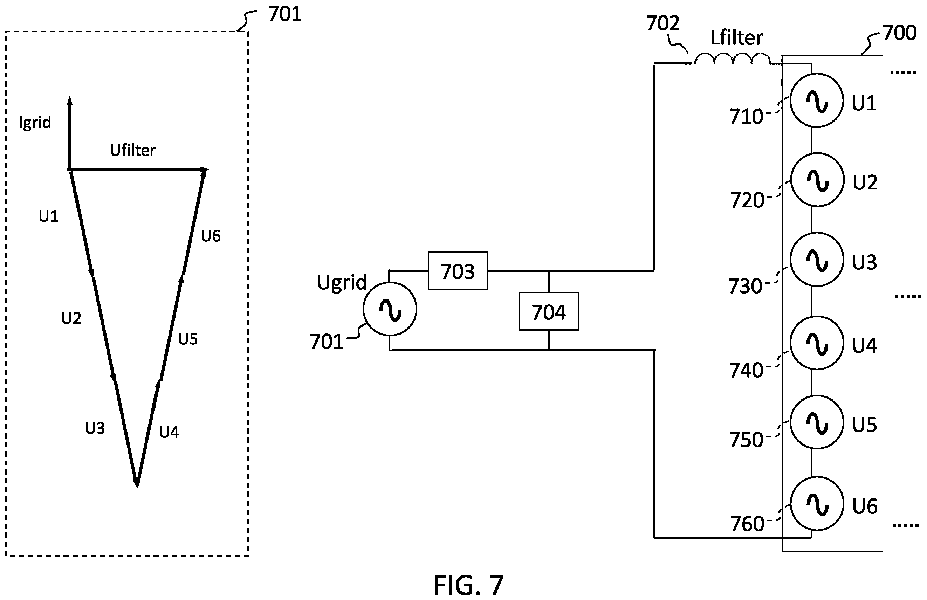

Fig. 7 illustrates an electrical power system according to an embodiment of the present disclosure and an operation thereof according to a control method according to an embodiment of the present disclosure. In particular, Fig. 7 illustrates an AC power system comprising an AC power source 701 being electrically coupled to a power converter 700 via a series-connected inductor 702. The power converter 700 may be an AC-to-DC power converter, in particular the power converter 300 or 300b, or an AC-to-AC power converter. The power converter 700 comprises six cells. AC voltages at the primary side of each of the six cells are represented by respective six voltage sources 710, 720, 730, 740, 750, and 760. The voltages of the six voltage sources 710, 720, 730, 740, 750, and 760 are denoted as $U_1$, $U_2$, $U_3$, $U_4$, $U_5$, and $U_6$, respectively. The remaining portion of the power converter 700 is omitted herein for simplicity. The system further comprises a first switch 703 and a second switch 704, wherein the first switch 703 electrically couples the power grid to the electrical component, i.e., the inductor, 702 in series, wherein the second switch 704 is electrically to a node between the first switch 703 and the electrical component 702. The second switch 704 electrically couples the power grid, i.e., AC power source, 701 to the electrical component 702 in parallel. In an embodiment, one of the first switch 703 and the second switch 704 is closed and the other one of the first switch 703 and the second switch 704 is closed. Said opening and closing are performed simultaneously or with a set time delay therebetween. In particular, when the first switch 703 is opened, i.e., electrically decoupling, and the second switch 704 is closed, i.e., electrically coupling, the AC power source does not provide a power to the system. In such embodiment, a loop, or a ring or an island, comprising the six voltage sources 710, 720, 730, 740, 750, and 760, the electrical component 702, and the second switch 704 is formed. The loop operates in a way that the loads, the sources and/or the storage means that are electrically coupled to the secondary sides of the plurality of cells, which in combination form the six voltage sources 710, 720, 730, 740, 750, and 760, are involved in a power balance operation. It is understood by the skilled person that the electrical system may be configured differently to achieve a power source isolation and to form a loop, or a ring, without the power source, but comprising the power converter and the electrical component.

It is assumed hereinafter that the power converter 700 is an AC-to-DC power converter 400 as configured in Fig. 6 with the same loads and the power flows, i.e., the first three cars 411, 421, and 431 are charging at nominal powers, the fourth car 441 is providing a nominal power to the system, cell with batteries 451 is providing a nominal power to the system, and photovoltaic 461 is providing power to the system. In this case, even when the AC power grid 701 is disconnected from the power converter 700, the electrical system may be controlled according to the method shown in Fig. 1 following the constraints of eq. (4). The resulting phasor parameters are shown in the phasor diagram 701. Specifically, the magnitude and phase of $U_1$, $U_2$, $U_3$, $U_4$, $U_5$, and $U_6$ are adjusted based on control signals generated using measurements of the electrical system. For instance, $U_1$, $U_2$, and $U_3$ are adjusted to be $\theta_{1,2,3}$ degrees out of phase with respect to a reference signal and $U_4$, $U_5$, and $U_6$ are adjusted to be $\theta_{4,5,6}$ degrees out of phase with respect to the reference signal. This is done such that a voltage difference, in the phasor domain, between a voltage of the power source and a vector sum of the voltages of the primary side of the plurality of cells 410, 420, 430, 440, 450, and 460 sets a voltage $U_{filter}$ across the electrical component, which in turn induces the controlled current $I_{grid}$ to flow through the electrical component, $L_{filter}$. Accordingly, the inner power flows of the electrical system are controlled.

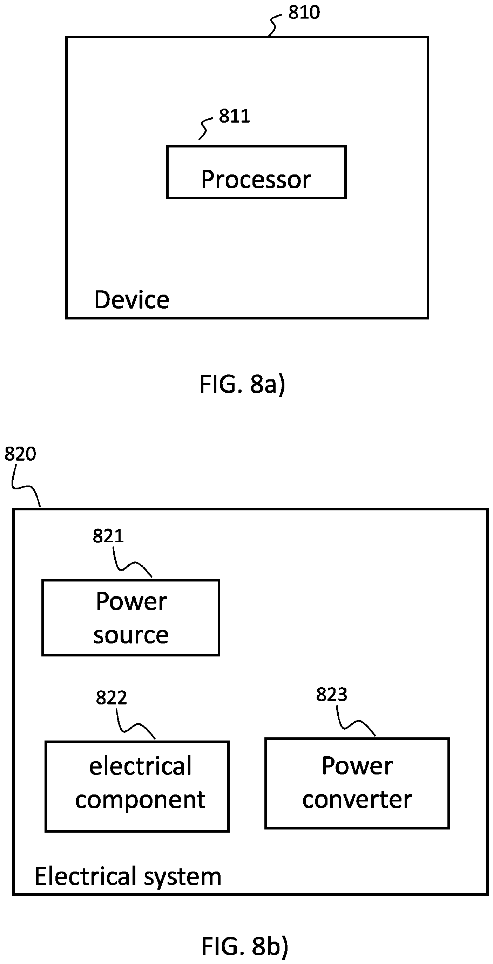

Fig. 8a) illustrates a device according to an embodiment of the present disclosure. In particular, the device 810 shown in Fig. 8a) is a device 810 for controlling inner power flows of an electrical system 800 comprising a power source 820, an electrical component 830, and a power converter 840 having a primary side, wherein the primary side of the power converter 840 is electrically coupled to the power source 820 via the electrical component 830, wherein the power converter 840 comprises a plurality of cells being electrically coupled in series to one another at a primary side of the plurality of cells, wherein the device 810 comprises a processor being configured to: obtain at least one electrical parameter of the electrical system 800; generate a control signal for each of the plurality of cells based on the obtained at least one electrical parameter; and control the inner power flows of the electrical system 800 by adjusting voltages of the primary side of the plurality of cells based on the generated control signal, such that a voltage difference between a voltage of the power source 820 and a sum of the voltages of the primary side of the plurality of cells causes a controlled current flow through the electrical component 830.

In an embodiment, the processor is further configured to perform the method according to any one of the embodiments disclosed herein.

In an embodiment, the device further comprises a communication unit, wherein the communication unit is configured to receive the at least one electrical parameter of the electrical system, and wherein the communication unit is configured to transmit the received at least one electrical parameter to the processor for further processing.

Fig. 8b) illustrates an electrical system according to an embodiment of the present disclosure. In particular, the electrical system 820 comprises a power source 821, an electrical component 822, a power converter 823 having a primary side, wherein the primary side of the power converter 823 is electrically coupled to the power source 821 via the electrical component 822, wherein the power converter 823 comprises a plurality of cells being electrically coupled in series to one another at a primary side of the plurality of cells.

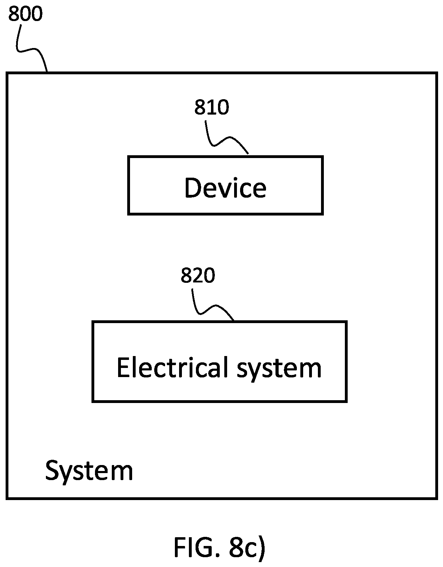

Fig. 8c) illustrates a system according to an embodiment of the present disclosure. In particular, the system 800 relates to a system for controlling inner power flows of the electrical system 820. The system 800 comprises the device 810 and the electrical system 820.

In an embodiment, the system further comprises at least one sensing unit, wherein the at least one sensing unit is configured to sense the at least one electrical parameter of the electrical system. In an embodiment, the at least one sensing unit is communicatively coupled to a communication unit. In an embodiment, the at least one sensing unit transmits the sensed at least one electrical parameter to the communication unit.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**Claims**

1.  A method for controlling inner power flows of an electrical system comprising a power source, an electrical component, and a power converter having a primary side, wherein the primary side of the power converter is electrically coupled to the power source via the electrical component, wherein the power converter comprises a plurality of cells being electrically coupled in series to one another at a primary side of the plurality of cells, the method comprising:

    obtaining at least one electrical parameter of the electrical system;
    generating a control signal for each of the plurality of cells based on the obtained at least one electrical parameter; and
    controlling the inner power flows of the electrical system by adjusting voltages of the primary side of the plurality of cells based on the generated control signal, such that a voltage difference between a voltage of the power source and a sum of the voltages of the primary side of the plurality of cells causes a controlled current flow through the electrical component.

2.  The method of claim 1, wherein the plurality of cells comprises a secondary side, different from the primary side of the plurality of cells, and wherein the plurality of cells are galvanically isolated from one another at the secondary side of the plurality of cells.

3.  The method of claim 1 or 2, wherein

    the power system is a DC system,
    the power source is a DC power source, and
    each of the plurality of cells comprises a DC-to-AC converter or a DC-to-DC converter, and
    a first DC portion of the DC-to-AC converter is electrically coupled to the primary side of the plurality of cells or a first DC portion of the DC-to-DC converter is electrically coupled to the primary side of the plurality of cells.

4.  The method of claim 3, wherein adjusting the voltages of the primary side of the plurality of cells comprises:
    adjusting a magnitude of the voltages of the primary side of the plurality of cells by controlling the first DC portion of the DC-to-AC converter based on the generated control signal or by controlling the first DC portion of the DC-to-DC converter based on the generated control signal.

**5.** The method of claim 1 or 2, wherein

the electrical system is an AC system,
the power source is an AC power source,
each of the plurality of cells comprises an AC-to-DC converter or an AC-to-AC converter, and
a first AC portion of the AC-to-DC converter is electrically coupled to the primary side of the plurality of cells or a first AC portion of the AC-to-AC converter is electrically coupled to the primary side of the plurality of cells.

**6.** The method of claim 5, wherein adjusting the voltages of the primary side of the plurality of cells comprises:

adjusting a magnitude and a phase of the voltages of the primary side of the plurality of cells by controlling the first AC portion of the AC-to-DC converter based on the generated control signal or by controlling the first AC portion of the AC-to-AC converter based on the generated control signal.

**7.** The method of claim 5 or 6, wherein

a voltage of the power grid, the voltages of the primary side of the plurality of cells, the controlled current, and the voltage drop over the electrical component are vectors comprising a magnitude and phase information, and
the sum of the voltages of the primary side of the plurality of cells is a vector sum.

**8.** The method of any one of claims 5 to 7, wherein

the electrical system further comprises a first switch and a second switch,
the first switch electrically couples the power grid to the electrical component in series,
the second switch being electrically coupled to a node between the first switch and the electrical component, and
the second switch electrically couples the power grid to the electrical component in parallel.

**9.** The method of claim 8, further comprising:

closing one of the first switch and the second switch; and
opening the other one of the first switch and the second switch.

**10.** The method of any one of claims 1 to 9, wherein

the electrical component is resistive, or
the electrical component is inductive and/or capacitive, and optionally resistive.

**11.** The method of any one of claims 1 to 10, wherein the obtained at least one electrical parameter is a voltage and/or a current of the power source, the electrical component, the primary side of the power converter, or the primary side of the plurality of cells.

**12.** The method of any one of claims 1 to 11, wherein the power of at least one of the plurality of cells flows bidirectionally based on the generated control signal.

**13.** A device for controlling inner power flows of an electrical system comprising a power source, an electrical component, and a power converter having a primary side, wherein the primary side of the power converter is electrically coupled to the power source via the electrical component, wherein the power converter comprises a plurality of cells being electrically coupled in series to one another at a primary side of the plurality of cells, wherein the device comprises a processor being configured to:

obtain at least one electrical parameter of the electrical system;
generate a control signal for each of the plurality of cells based on the obtained at least one electrical parameter; and
control the inner power flows of the electrical system by adjusting voltages of the primary side of the plurality of cells based on the generated control signal, such that a voltage difference between a voltage of the power source and a sum of the voltages of the primary side of the plurality of cells causes a controlled current flow through the electrical component.

**14.** The device of claim 13, wherein the processor is further configured to perform the method according to any one of claims 2 to 12.

**15.** A system for controlling inner power flows of an electrical system, wherein the system comprises the device according to claim 13 or 14, and the electrical system comprising a power source, an electrical component, a power converter having a primary side, wherein the primary side of the power converter is electrically coupled to the power source via the electrical component, wherein the power converter comprises a plurality of cells being electrically coupled in series to one another at a primary side of the plurality of cells.

S101 — obtaining at least one electrical parameter of the electrical system

S102 — generating a control signal for each of the pluraltiy of cells based on the obtained at least one electrical parameter

S103 — controlling the inner power flows of the electrical system by adjusting voltages of the primary side of the plurality of cells based on the generated control signal, such that a voltage difference between a voltage of the power source and a sum of the voltages of the primary side of the plurality of cells causes a controlled current flow through the electrical component

FIG. 1

FIG. 2a)

FIG. 2b)

FIG. 3a)

FIG. 3b)

FIG. 4

EP 4 523 950 A1

FIG. 5

EP 4 523 950 A1

FIG. 6

EP 4 523 950 A1

FIG. 7

810

Processor 811

Device

FIG. 8a)

820

Power source 821

electrical component 822

Power converter 823

Electrical system

FIG. 8b)

800

810

Device

820

Electrical system

System

FIG. 8c)

Europäisches
Patentamt

European
Patent Office

Office européen
des brevets

# EUROPEAN SEARCH REPORT

Application Number

EP 23 19 7551

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/348096 A1 (KEISTER JOSH [US] ET AL) 3 November 2022 (2022-11-03) * figures 1,2,3,8 * * paragraphs [0009], [0023], [0034], [0043], [0049], [0050], [0055], [0060] – [0061], [0066], [0068], [0080] * | 1-15 | INV. B60L53/10 B60L53/62 B60L55/00 H02J7/04 |
| X | US 2022/402390 A1 (SMOLENAERS STEFAN [AU]) 22 December 2022 (2022-12-22) * figures 1-6,11-14 * * paragraphs [0082], [0205] – [0211] * | 1-15 | |
| X | US 2017/141694 A1 (KEISTER LYLE THOMAS [US] ET AL) 18 May 2017 (2017-05-18) * figures 1-2 * * paragraphs [0008] – [0010], [0013], [0034] – [0035] * | 1-15 | |
| A | EP 0 596 988 B1 (WAVEDRIVER LTD [GB]) 4 June 1997 (1997-06-04) * figures 1-7 * * column 9, lines 24-37 * | 1-15 | TECHNICAL FIELDS SEARCHED (IPC) B60L H02J |

The present search report has been drawn up for all claims

| Place of search | Date of completion of the search | Examiner |
|---|---|---|
| The Hague | 26 January 2024 | Tzortzopoulos, O |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

**EP 23 19 7551**

This annex lists the patent family members relating to the patent documents cited in the above-mentioned European search report.
The members are as contained in the European Patent Office EDP file on
The European Patent Office is in no way liable for these particulars which are merely given for the purpose of information.

**26-01-2024**

| Patent document cited in search report | | | Publication date | Patent family member(s) | | Publication date |
|---|---|---|---|---|---|---|
| US 2022348096 | A1 | | 03-11-2022 | US 11292352 | B1 | 05-04-2022 |
| | | | | US 2022348096 | A1 | 03-11-2022 |
| US 2022402390 | A1 | | 22-12-2022 | US 2022402390 | A1 | 22-12-2022 |
| | | | | WO 2021092658 | A1 | 20-05-2021 |
| US 2017141694 | A1 | | 18-05-2017 | DE 112016004548 | T5 | 21-06-2018 |
| | | | | US 2017099008 | A1 | 06-04-2017 |
| | | | | US 2017141694 | A1 | 18-05-2017 |
| | | | | US 2018006570 | A1 | 04-01-2018 |
| | | | | WO 2017062381 | A1 | 13-04-2017 |
| EP 0596988 | B1 | | 04-06-1997 | AT E153928 | T1 | 15-06-1997 |
| | | | | AU 669853 | B2 | 27-06-1996 |
| | | | | CA 2114835 | A1 | 18-02-1993 |
| | | | | DE 69220228 | T2 | 25-09-1997 |
| | | | | DK 0596988 | T3 | 29-12-1997 |
| | | | | EP 0596988 | A1 | 18-05-1994 |
| | | | | ES 2106192 | T3 | 01-11-1997 |
| | | | | GR 3024130 | T3 | 31-10-1997 |
| | | | | JP H09508256 | A | 19-08-1997 |
| | | | | US 5642270 | A | 24-06-1997 |
| | | | | WO 9302887 | A1 | 18-02-1993 |

EPO FORM P0459